# EUROPÄISCHE PATENTSCHRIFT

(11) **EP 2 705 990 B1**
(45) Veröffentlichungstag und Bekanntmachung des Hinweises auf die Patenterteilung: **20.05.2015**
(21) Anmeldenummer: 13003517.3
(22) Anmeldetag: 11.07.2013
(51) Int. Cl.: H02J 1/08, H02J 1/00, B60R 16/033, H02J 7/14

(54) **Kraftfahrzeug mit einem Mehrspannungs-Bordnetz und zugehöriges Verfahren**
Motor vehicle with a multiple voltage on-board electrical wiring system and associated method
Véhicule automobile doté d'un réseau de bord multi-tension et procédé associé

(30) Priorität: 07.09.2012 DE 102012017674
(43) Veröffentlichungstag der Anmeldung: 12.03.2014
(73) Patentinhaber: AUDI AG, 85045 Ingolstadt (DE)
(72) Erfinder: Achhammer, Siegfried, DE - 93049 Regensburg (DE); Winkler, Josef, DE - 85110 Kipfenberg (DE)
(74) Vertreter: Herbst, Matthias Heinz

(56) Entgegenhaltungen:
- WO-A1-2013/160341
- DE-A1- 10 055 531
- DE-A1- 10 321 155
- DE-A1-102004 062 480

## Beschreibung

Die Erfindung betrifft ein Kraftfahrzeug mit einem Bordnetz, welches ein einen ersten elektrischen Energiespeicher aufweisendes Niedrigspannungsnetz mit einer ersten Spannung und ein einen zweiten elektrischen Energiespeicher aufweisendes Hochspannungsnetz mit einer zweiten Spannung, die höher als die erste Spannung ist, aufweist. Daneben betrifft die Erfindung ein Verfahren zum Betrieb eines eine Komfortfunktion realisierenden Verbrauchers in einem solchen Kraftfahrzeug.

Immer häufiger werden in Kraftfahrzeugen Verbraucher vorgeschlagen, die eine höhere Spannung als die üblicherweise in Bordnetzen verwendete Spannung, beispielsweise 12 V, benötigen. Beispiele für solche Verbraucher sind eine Frontscheibenheizung, die eine Frontscheibe des Kraftfahrzeugs möglichst schnell von Schnee und Eis befreien soll, sowie elektrische Turbolader und dergleichen. Aus diesem Grund wurde vorgeschlagen, das Bordnetz des Kraftfahrzeugs um ein Hochspannungsnetz für derartige Verbraucher zu erweitern, beispielsweise ein 48 V-Netz. Dabei sind im Stand der Technik verschiedene Varianten bekannt, um derartige Mehrspannungs-Bordnetze, also Bordnetze, die Teilnetze mit unterschiedlichen Spannungen aufweisen, zu realisieren.

In einer ersten Lösung, der sogenannten Insellösung, wurde vorgeschlagen, über einen Gleichspannungswandler (DC/DC-Wandler) aus dem Niedrigspannungsnetz, beispielsweise dem 12 V-Netz, die Spannung für die Verbraucher höherer Spannung zu erzeugen. Dies ist jedoch nachteilhaft, da dadurch eine hohe Belastung eines Generators des Kraftfahrzeugs bzw. eines ersten Energiespeichers im Niedrigspannungsnetz auftritt.

DE 10 2007 004 279 A1 betrifft ein Mehrspannungsbordnetz für ein Kraftfahrzeug, in dem vorgeschlagen wird, einen ersten Energiespeicher und einen zweiten Energiespeicher, die jeweils einem Niederspannungs-Bordnetz und einem Hochspannungs-Bordnetz zugeordnet sind, derart in Reihe zu schalten, dass sich durch Zusammennahme beider Energiespeicher die benötigte zweite Spannung in einem Hochspannungs-Bordnetzzweig ergibt. Der Vorteil der dort beschriebenen Variante ist es, die hinzugefügte zweite Batterie auch für 12 V-Verbraucher im Niederspannungs-Bordnetz einsetzen zu können.

Jedoch ist die in DE 10 2007 004 279 A1 beschriebene Anordnung dahingehend nachteilhaft, dass der üblicherweise als Bleibatterie ausgeführte erste Energiespeicher auch bei der höheren Spannung verwendet wird, so dass die Rückwirkung eines Hochspannungs-Verbrauchers auf das Niedrigspannungsnetz sehr hoch ist. Beispielsweise existiert bei Bleibatterien zwischen der Lade- und der Entladespannung eine Hysterese von 1 V oder mehr, so dass die Entladung beispielsweise erst ab 12,5 V beginnt. Nimmt man nun einen Stromimpuls von 150 A auf der Hochspannungsseite und einen Batterieinnenwiderstand des ersten Batteriespeichers von 10 mΩ an, so ergibt sich ein Spannungseinbruch von 12,5 V auf 11,0 V, so dass mithin Spannungsschwankungen auftreten, die die Funktion von Verbrauchern des Niedrigspannungsnetzes einschränken oder gefährden können, was insbesondere bei Sicherheitsverbrauchern von großer Bedeutung ist, aber auch bei beispielsweise Komfortverbrauchern zu einem Flackern und dergleichen führen kann. Ein weiterer Nachteil der in DE 10 2007 004 279 A1 beschriebenen Anordnung ist es, dass die 12 V-Batterie, also der erste Energiespeicher, auch über die Hochspannungsverbraucher zusätzlich zyklisiert wird, was die Lebensdauer einschränkt.

Die nachveröffentlichte Druckschrift WO 2013/160341 A1 betrifft ein Fahrzeug mit einem ersten Teilbordnetz und einem zweiten Teilbordnetz. Dabei umfasst das erste Teilbordnetz einen Starter, einen dem Starter parallel geschalteten Bordnetzspeicher und einen ersten Schalter zwischen der ersten Gruppe von Verbrauchern und dem elektrischen Bordnetzspeicher. Das zweite Teilbordnetz umfasst einen ersten Gleichspannungssteller, ein elektrisches Stützspeichermodul, das der zweiten Gruppe von elektrischen Verbrauchern an einen zweiten Knotenpunkt parallel geschaltet ist, wobei eine Schnittstelle des ersten Gleichspannungsstellers mit dem zweiten Knotenpunkt verbunden ist, und einen elektrischen Mittenabgriff aufweist, welcher über einen zweiten Schalter mit dem ersten Knotenpunkt verbunden ist. Das Stützspeichermodul kann dabei einen ersten Teilspeicher und einen zweiten Teilspeicher elektrisch in Reihe umfassen. Es sind verschiedene Betriebsmodi beschrieben, unter anderem ein Equilibrierbetriebmodus, bei welchem der erste Schalter geschlossen ist und der zweite Schalter geschlossen ist. Im Equilibrierbetrieb wird der zweite Teilspeicher über eine Potenzialabsenkung am zweiten Knotenpunkt entladen oder über eine Potenzialerhöhung am zweiten Knotenpunkt, bis der erste Teilspeicher und der zweite Teilspeicher einen vergleichbaren relativen Ladezustand aufweisen. Als Hochleistungsverbraucher sind elektrische Fahrwerkskomponenten genannt.

DE 100 55 531 A1 betrifft eine elektronische Schaltungsanordnung zur Spannungsversorgung in Kraftfahrzeugen, deren Verwendung und ein Verfahren zum Betreiben einer Spannungsversorgung. Dabei soll die Schaltungsanordnung mindestens ein Teilspannungsnetz umfassen, das eine niedrigere Spannung aufweist als ein Netz mit höherer Spannung, und es sollen zusätzlich zu einer wiederaufladbaren Starterbatterie mindestens zwei Bordnetz-Batterieelemente vorgesehen sein, die mittels elektronischer Schaltelemente parallel oder in Reihe zueinander verschaltet sein können. Zum Zwecke des Ladens können einzelne Batterien individuell oder auch mehrere gleichzeitig parallel an das Bordnetz geschaltet werden. Eine Reihenschaltung wird nur dann herbeigeführt, wenn eine Energieanforderung eines Hochspannungsverbrauchers, insbesondere einer Bremse, vorliegt. Der Erfindung liegt daher die Aufgabe zugrunde, ein Bordnetz für ein Kraftfahrzeug anzugeben, welches Spannungseinbrüche auf der Niedrigspannungsseite beim Betrieb von Hochspannungs-Verbrauchern möglichst vermeidet und die Lebensdauer eines ersten Energiespeichers des Niedrigspannungsnetzes erhöht.

Zur Lösung dieser Aufgabe sind bei einem Kraftfahrzeug der eingangs genannten Art erfindungsgemäß die Merkmale des Anspruchs 1 vorgesehen.

Erfindungsgemäß wird also vorgeschlagen, den zweiten Energiespeicher derart aufzuteilen, dass eine Konstellation von Energiespeichern entsteht, in der seitens des Niedrigspannungsnetzes zwei Energiespeicher parallel geschaltet sind, nämlich der erste Energiespeicher, üblicherweise eine Bleibatterie, und der erste Teilenergiespeicher. Diesem in Reihe geschaltet zum Hochspannungsnetz hin ist ein weiterer Energiespeicher, der zweite Teilenergiespeicher, vorgesehen. Anders ausgedrückt kann man auch sagen, dass an dem zweiten Energiespeicher eine Mittelanzapfung vorgesehen wird. Diese Ausgestaltung bringt eine Vielzahl von Vorteilen mit sich. Denn wird dem beispielsweise als 12 V-Bleibatterie ausgebildeten ersten Energiespeicher noch ein weiterer Energiespeicher, welcher bevorzugt keine Hysterese zwischen Ladespannung und Entladespannung aufweist, parallel geschaltet, ist die Rückwirkung von der Hochspannungsseite auf die Niedrigspannungsseite deutlich geringer, nachdem sich durch die Parallelschaltung der Innenwiderstand des Gesamtenergiespeichers aus erstem Energiespeicher und erstem Teilenergiespeicher reduziert. Wird beispielsweise als erster Teilenergiespeicher, was auch für den zweiten Teilenergiespeicher zweckmäßig ist, ein bezüglich der Lade- und Entladespannung hysteresefreier Energiespeicher verwendet, welcher wie der erste Energiespeicher einen Innenwiderstand von 10 mΩ aufweist, ergibt sich ein Gesamtwiderstand von 5 mΩ. Tritt somit im Hochspannungsnetz ein 150 A-Impuls auf, ergibt sich bei einer Ladespannung von 14 V auf der Niedrigspannungsseite nur ein äußerst geringer Spannungseinbruch auf 13,25 V. Gegenüber dem genannten Stand der Technik ist mithin ein deutlicher Vorteil gegeben.

Dies ist im Allgemeinen insbesondere für sicherheitsrelevante Verbraucher von großer Bedeutung, nachdem bei niedriger Versorgungsspannung die volle Funktionsfähigkeit verloren gehen kann. Auch für Komfortverbraucher ist jedoch eine konstante Versorgungsspannung relevant, nachdem bei Spannungsschwankungen beispielsweise Beleuchtungen flackern können.

Die erfindungsgemäße Ausgestaltung bringt jedoch auch hoch weitere Vorteile mit sich. Ist, wie üblich, ein an das Niedrigspannungsnetz angeschlossener Generator in dem Kraftfahrzeug vorgesehen, werden sowohl der erste Energiespeicher als auch der erste Teilenergiespeicher des zweiten Energiespeichers sehr schnell durch den Generator geladen. Die Ladezeit über den vorgesehenen Gleichspannungswandler, um den zweiten Teilenergiespeicher zu laden, ist dabei länger. Sowohl der erste Energiespeicher als auch der erste Teilenergiespeicher können vorteilhaft zum Betrieb eines Starters des Kraftfahrzeugs, insbesondere für einen Verbrennungsmotor, verwendet werden, so dass hier mehr Energie zur Verfügung steht. Jedoch auch insgesamt kann der zweite Teilenergiespeicher im Niedrigspannungsnetz mit genutzt werden und dieses stützen, beispielsweise in Phasen hoher Netzlast bzw. Generatorbelastung. Der zweite Teilenergiespeicher wirkt also als eine Art weitere 12 V-Batterie.

Dabei sei an dieser Stelle noch angemerkt, dass letztlich, je nach gewünschten Werten für die erste Spannung und die zweite Spannung, welche beispielsweise zwischen 36 und 52 V liegen kann, bevorzugt bei 48 V, verwendet werden können. Es muss also bezüglich der Aufteilung des zweiten Energiespeichers keinerlei Symmetrie vorliegen, sondern es kann beispielsweise vorgesehen sein, dass bei einer Ausgestaltung des zweiten Energiespeichers aus einzelnen Zellen sechs der Zellen im Niedrigspannungsnetz parallel zu dem ersten Energiespeicher geschaltet sind, 12 Zellen zum Hochspannungsnetz hin dazu in Reihe.

Wie bereits erwähnt, ist es besonders vorteilhaft, wenn der erste und/oder der zweite Teilenergiespeicher ein bezüglich der Lade- und Entladespannung hysteresefreier Energiespeicher ist. Das bedeutet also, der zweite Energiespeicher wird bevorzugt aus Teilenergiespeichern aufgebaut, deren Ladespannung im Wesentlichen der Entladespannung entspricht, insbesondere also innerhalb eines Toleranzbereichs, bevorzugt von ± 0,1 V oder weniger. Dies trägt deutlich zur Reduzierung der Spannungsschwankungen im Niedrigspannungsnetz bei, wie oben anhand der beispielhaften Rechnung bereits erläutert wurde.

Entsprechend kann in zweckmäßiger Weiterbildung der Erfindung vorgesehen sein, dass der erste und/oder der zweite Teilenergiespeicher ein Superkondensator ist. Solche Superkondensatoren werden häufig auch als "Supercap"' bezeichnet. Für Anwendungen, in denen über eine relativ kurze Zeit hohe Leistungen erforderlich sind, sind Superkondensatoren besonders geeignet. Insbesondere ermöglicht es die vorliegende Erfindung also, einen Superkondensator als zweiten Energiespeicher derart aufzuspalten, dass ein Teil des Superkondensators, mithin der erste Teilenergiespeicher, letztlich eine Ergänzung zu einer 12 V-Batterie oder einem sonstigen ersten Energiespeicher bildet.

Auch wenn die Ausgestaltung mit Superkondensatoren im Rahmen der vorliegenden Erfindung bevorzugt wird, sind selbstverständlich auch andere Ausgestaltungen des zweiten Energiespeichers und seiner Teilenergiespeicher denkbar. So ist es beispielsweise möglich, dass als andere Teilenergiespeicher ohne Hysterese eine Kombination aus drei Lithium-Zellen (LMO) und einer Lithiumtitanat-Zelle (LTO), eine Kombination aus drei Lithium-Zellen (LMO) und zwei Nickelmetallhydrid-Zellen (NiMH) oder aber auch eine Kombination von vier Lithium-Eisenphosphat-Zellen (LPO) verwendet werden können. Ersichtlich sind verschiedene Möglichkeiten denkbar.

In einer besonders vorteilhaften Ausgestaltung der vorliegenden Erfindung kann vorgesehen sein, dass dem zweiten Teilenergiespeicher eine Lithium-Ionen-Batterie mit der Spannung des zweiten Teilenergiespeichers entsprechender Spannung parallel geschaltet ist. Zusätzlich zu einer Parallelschaltung seitens des Niedrigspannungsnetzes ist es also auch denkbar, eine derartige Parallelschaltung von Energiespeichern, hier zusätzlich einer Lithium-Ionen-Batterie, vorzusehen, wobei in diesem Fall der zweite Teilenergiespeicher besonders bevorzugt ein Superkondensator ist. Konkret kann also zum Hochspannungsnetz hin parallel zu einem Superkondensator als zweiter Teilenergiespeicher auch noch eine Lithium-Ionen-Batterie vorgesehen werden, was es also erlaubt, im Hochspannungsnetz nicht nur kurzzeitig hohe Ströme benötigende Verbraucher, mithin Hochleistungsverbraucher, vorzusehen, sondern auch Hochenergieverbraucher zu versorgen, die für eine längere Zeit Energie benötigen, was beispielsweise im Hinblick auf eine Frontscheibenheizung als Verbraucher des Hochspannungsnetzes, die als Hochenergieverbraucher einzuordnen wäre, zweckmäßig ist. Eine Lithium-Ionen-Batterie weist dabei den weiteren Vorteil auf, dass sie zyklisierbar ist, das bedeutet, ihre Lebensdauer erstreckt sich über deutlich mehr Zyklen als beispielsweise bei einer Bleibatterie, beispielsweise den zehn- oder gar den zwanzigfachen Wert, so dass eine derartige zusätzlich vorgesehene Lithium-Ionen-Batterie idealerweise während der Lebensdauer des Kraftfahrzeugs nicht ausgetauscht werden muss. Die Lithium-Ionen-Batterie kann mithin (wie der zweite Teilenergiespeicher) geladen vorliegen, so dass sie insbesondere auch schon vor Tätigkeit eines Generators des Kraftfahrzeugs, also bevor ein Verbrennungsmotor oder dergleichen aktiv ist, eingesetzt werden kann, um einen Verbraucher, beispielsweise eine Heizeinrichtung, insbesondere eine Frontscheibenheizung, zu aktivieren, so dass ohne Motorstart bereits derartige Vorfunktionen einsetzbar sind, worauf im Folgenden noch näher eingegangen werden wird. Das Vorsehen der beiden parallel geschalteten Energiespeicher zum Hochspannungsnetz hin reduziert weiterhin auch die Belastung eines Generators unmittelbar nach Motorstart des Kraftfahrzeugs, zudem werden die Energiespeicher des Niedrigspannungsnetzes entlastet, welche nur beispielsweise ein Drittel der Energie für das Hochspannungsnetz bereitstellen müssen.

Wie bereits erwähnt wurde, sind verschiedene Verbraucher an das Hochspannungsnetz anschließbar. Konkret ist vorgesehen, dass ein an dem Hochspannungsnetz angeschlossener Verbraucher ein eine Komfortfunktion realisierender Verbraucher oder ein elektrischer Turbolader ist. Elektrische Turbolader gewinnen als Option in letzter Zeit zunehmend Bedeutung; auch eine höhere Spannung benötigende Komfortfunktionen werden immer gängiger. Insbesondere kann es sich bei dem eine Komfortfunktion realisierenden Verbraucher um eine Heizeinrichtung, insbesondere eine Heizeinrichtung für eine Frontscheibe des Kraftfahrzeugs (Frontscheibenheizung) handeln.

In diesem Zusammenhang ergibt sich eine besonders vorteilhafte Anwendung der vorliegenden Erfindung. So kann in einer besonders vorteilhaften Ausgestaltung des erfindungsgemäßen Kraftfahrzeugs eine Steuereinrichtung vorgesehen sein, die zur Aktivierung des eine Komfortfunktion realisierenden Verbrauchers vor Inbetriebnahme des Kraftfahrzeugs, insbesondere vor Betreten des Kraftfahrzeugs durch den Fahrer, bei Vorliegen eines Aktivierungssignals ausgebildet ist. Das bedeutet, es ist möglich, dass insbesondere bereits vor einer aktiven Niedrigspannungsnetzversorgung, konkret beispielsweise also vor dem Start des Verbrennungsmotors und mithin eines Generators, eine Funktion mit einem temporär aktiven HochspannungsVerbraucher ausgeführt werden, da die Energie dazu bzw. ein nennenswerter Teil davon aus dem zweiten, zuvor schon geladenen Energiespeicher entnommen wird und somit insbesondere nicht die Startfähigkeit durch zu starke Energieentnahme aus einer Starterbatterie, insbesondere dem ersten Energiespeicher, gefährdet. Es kann also eine Ansteuerungslogik vorgesehen sein, die bei Vorhandensein eines Aktivierungssignals auch dann bereits Hochleistungs- und/oder Hochenergieverbraucher, insbesondere eine Frontscheibenheizung, aktivieren kann, wenn das Kraftfahrzeug noch nicht in Betrieb genommen wurde bzw. kein Motorstart durchgeführt wurde.

In konkreter Ausgestaltung kann hierbei beispielsweise vorgesehen sein, dass das Aktivierungssignal von einem dem Kraftfahrzeug zugeordneten Schlüssel und/oder einer dem Kraftfahrzeug zugeordneten Fernbedienung aussendbar ist und/oder unter Berücksichtigung von den Ort des Schlüssels beschreibenden Messdaten ermittelbar ist. Im ersten Fall ist letztlich, sei es über den Schlüssel oder eine sonstige Fernbedienung, dem Benutzer des Kraftfahrzeugs die äußerst vorteilhafte Möglichkeit gegeben, bereits bevor er das Kraftfahrzeug betritt, schon Funktionen, insbesondere Heizfunktionen, zu aktivieren, um das Kraftfahrzeug idealerweise in einem komfortabel fahrbereiten Zustand vorzufinden. Beispielsweise kann eine Frontscheibe bereits abgetaut sein, wenn sich der Fahrer in das Kraftfahrzeug hinein begibt. Eine andere Variante kann auch die automatische Aktivierung von Fahrzeugfunktionen sein, beispielsweise abhängig von einem vermessenen Ort eines mit einem Transponder versehenen Schlüssels. Stellt das Steuergerät beispielsweise fest, dass sich der Schlüssel, mithin ein Benutzer, dem Kraftfahrzeug nähert und gleichzeitig über geeignete Sensorik, dass eine Beheizung notwendig ist, beispielsweise eine Beheizung der Frontscheibe, so kann auch eine vollautomatische Aktivierung vorgesehen werden.

In der dargestellten Ausgestaltung der vorliegenden Erfindung wird der erste Energiespeicher, der beispielsweise auch als Starterbatterie wirken kann, deutlich geringer belastet, beispielsweise nur zu einem Drittel, so dass die Motorstartfähigkeit im Niedrigspannungsnetz erhalten bleibt.

Es sei an dieser Stelle jedoch angemerkt, dass sich das grundsätzliche Steuerungsverfahren auch für andere Bordnetze abseits des beim erfindungsgemäßen Kraftfahrzeug beschriebenen vorteilhaft einsetzen lässt, um derartige Funktionen, die einen Betrieb von Verbrauchern, insbesondere Heizeinrichtungen, bereits vor Inbetriebnahme des Kraftfahrzeugs erlauben, zu realisieren. Allgemein gesagt könnte mithin auch ein Kraftfahrzeug vorgesehen sein, das einen eine Komfortfunktion realisierenden Verbraucher und einen dem Verbraucher zugeordneten elektrischen Energiespeicher sowie eine den Betrieb des Verbrauchers steuernde Steuereinrichtung umfasst, welche sich dann dadurch auszeichnet, dass die Steuereinrichtung zur Aktivierung des Verbrauchers vor Inbetriebnahme des Kraftfahrzeugs, insbesondere vor Betreten des Kraftfahrzeugs durch den Fahrer, bei Vorliegen eines Aktivierungssignals ausgebildet ist. Das Aktivierungssignal kann wie bereits beschrieben gewählt werden. Beispielsweise sind also auch Ausgestaltungen denkbar, bei denen der dem Verbraucher zugeordnete elektrische Energiespeicher separat von einem Niedrigspannungsnetz gegen Masse verschaltet wird, so dass nur von ihm aus eine Versorgung von derartigen temporären Verbrauchern ermöglicht werden kann. In einer solchen Ausgestaltung würde die gesamte Energie dem dem Verbraucher zugeordneten Energiespeicher entnommen werden, so dass ein Niedrigspannungsnetz bzw. eine darin vorgesehene Starterbatterie überhaupt nicht belastet würde. So wird das Niedrigspannungsnetz weiter bezüglich von Verbrauchsspitzen entlastet und der Generator kann somit nach geringeren Anforderungen ausgelegt werden.

Dabei sei an dieser Stelle noch angemerkt, dass die Entladestromfähigkeit des dem Verbraucher zugeordneten Energiespeichers bei Kälte aufgrund höheren Innenwiderstands reduziert sein kann. Hier ist eine geeignete Auslegung des dem Verbraucher zugeordneten Energiespeichers zweckmäßig, so dass der anfangs geringere Strom durch relativ schnelle Eigenerwärmung des Energiespeichers, insbesondere der Zellen des Energiespeichers, mit einhergehender Innenwiderstandsreduzierung zeitnah erhöht werden kann, so dass insgesamt eine ausreichende Systemperformance erreicht wird. Mit anderen Worten bedeutet dies bei einem aus verschiedenen Zellen aufgebauten, dem Verbraucher zugeordneten Energiespeicher, dass die Anzahl der Zellen mit ihrem Eigenwiderstand bei Kälte so gewählt wird, dass eine Anpassung an den Ausgangswiderstand derart vorliegt, dass der Kältestrom nicht höher als erlaubt ist.

In Weiterbildung der vorliegenden Erfindung kann vorgesehen sein, dass die Steuereinrichtung zum Laden des zweiten Teilenergiespeichers und gegebenenfalls der Lithium-Ionen-Batterie bei einer einen Schwellwert unterschreitenden Auslastung des Bordnetzes des Kraftfahrzeugs ausgebildet ist. Das Wiederaufladen des zweiten Teilenergiespeichers (und gegebenenfalls der Lithium-Ionen-Batterie) kann mithin zu einem Zeitpunkt erfolgen, an dem die Auslastung des Bordnetzes nicht zu hoch ist, insbesondere die Auslastung eines Generators. Damit ergibt sich eine längere Nachladezeit, die allgemein betrachtet beispielsweise kurz nach dem Motorstart, insbesondere dann, wenn die zu ladenden, dem Hochspannungsnetz zugeordneten Energiespeicher bereits warm sind, erfolgen kann.

Wie bereits angedeutet, ist es vorgesehen, dass das Hochspannungsnetz und das Niedrigspannungsnetz über einen Gleichspannungswandler verbunden sind. Auf diese Weise ist es mithin möglich, Energien zwischen den Netzen auszutauschen. Dies ermöglicht es in einer bevorzugten Ausgestaltung, dass das Kraftfahrzeug einen zum Laden des ersten und des zweiten Energiespeichers ausgebildeten Generator aufweist. Neben dem ersten Energiespeicher und dem ersten Teilenergiespeicher kann über den Gleichspannungswandler mithin auch ein Laden des zweiten Teilenergiespeichers erfolgen sowie gegebenenfalls der Lithium-Ionen-Batterie. Dabei kann, wie bereits dargelegt wurde, der erste Teilenergiespeicher recht schnell geladen werden, gleichzeitig kann der Gleichspannungswandler entsprechend angesteuert werden, um beispielsweise den Ladestrom für den zweiten Teilenergiespeicher so anzupassen, dass die Belastung des Niedrigspannungsnetzes bzw. die Auslastung des Generators beschränkt bleibt. Insbesondere ist so eine Regelung der Nachladeleistung denkbar, welche beispielsweise auf 200 W festgelegt werden kann, was deutlich niedriger ist, als die beispielsweise benötigten 1000 W Heizleistung, wenn beispielsweise als Verbraucher eine Heizeinrichtung an das Hochspannungsnetz angeschlossen ist.

Denkbar ist es jedoch auch, dass Energie des zweiten Teilenergiespeichers (und gegebenenfalls der Lithium-Ionen-Batterie) über den Gleichspannungswandler in dem Niedrigspannungsnetz nutzbar ist. Es ist also auch möglich, beispielsweise dann, wenn Hochspannungs-Verbraucher gerade keine Energie benötigen, aus dem Hochspannungsnetz dem Niedrigspannungsnetz bzw. dessen Verbrauchern über den Gleichspannungswandler Energie zur Verfügung zu stellen.

Es sei darauf hingewiesen, dass jedoch grundsätzlich auch der umgekehrte Fall denkbar ist, das bedeutet, es kann vorgesehen sein, dass eine Schalteinrichtung zum Verbinden eines an dem Hochspannungsnetz vorgesehenen Verbrauchers mit dem ersten Energiespeicher oder dem ersten Teilenergiespeicher des Niedrigspannungsnetzes bei entladenem zweiten Teilenergiespeicher (und gegebenenfalls entladener Lithium-Ionen-Batterie) vorgesehen ist. Sollte also der zweite Teilenergiespeicher (und gegebenenfalls auch die Lithium-Ionen-Batterie) bei Funktionsanforderung nicht geladen sein, kann der Verbraucher alternativ zumindest temporär an das Niedrigspannungsnetz geschaltet und mit gegebenenfalls reduzierter Leistung dennoch betrieben werden.

Neben dem Kraftfahrzeug betrifft die vorliegende Erfindung auch ein Verfahren zum Betrieb eines eine Komfortfunktion realisierenden Verbrauchers in einem erfindungsgemäßen Kraftfahrzeug, welcher Verbraucher an das Hochspannungsnetz angeschlossen ist, wobei der Verbraucher vor Inbetriebnahme des Kraftfahrzeugs, insbesondere vor Betreten des Kraftfahrzeugs durch den Fahrer, aktiviert wird. Wie bereits oben erwähnt wurde, geht es beim erfindungsgemäßen Verfahren um die bereits erwähnte frühzeitige Ansteuerungsstrategie, welche auf besonders vorteilhafte Art und Weise mit dem Bordnetz des erfindungsgemäßen Kraftfahrzeugs realisiert werden kann und eine deutliche Komfortverbesserung für die Benutzer des Kraftfahrzeugs beinhaltet. Sämtliche diesbezüglichen Ausführungen lassen sich analog auf das erfindungsgemäße Verfahren übertragen, so dass beispielsweise ein Ansteuerungssignal verwendet werden kann, um den Zeitpunkt der Aktivierung zu bestimmen, welches von einem Schlüssel und/oder einer Fernbedienung ausgesendet werden kann oder durch Messdatenauswertung selbst bestimmt werden kann. Auch eine Ladestrategie kann in das grundsätzlich unabhängig vom erfindungsgemäßen Kraftfahrzeug realisierbare Verfahren integriert werden, indem beispielsweise ein Laden von dem Hochspannungsnetz zugeordneten Energiespeichern, konkret des zweiten Teilenergiespeichers, bei niedriger Last des Bordnetzes bzw. Generators erfolgen kann.

Weitere Vorteile und Einzelheiten der vorliegenden Erfindung ergeben sich aus den im folgenden beschrieben Ausführungsbeispielen sowie anhand der Zeichnungen. Dabei zeigen:
- Fig. 1: eine Prinzipskizze eines Bordnetzes eines erfindungsgemäßen Kraftfahrzeugs in einer ersten Ausführungsform,
- Fig. 2: eine Prinzipskizze des Bordnetzes eines erfindungsgemäßen Kraftfahrzeugs in einer zweiten Ausführungsform, und
- Fig. 3: einen Graphen zur Ansteuerung einer Frontscheibenheizung.

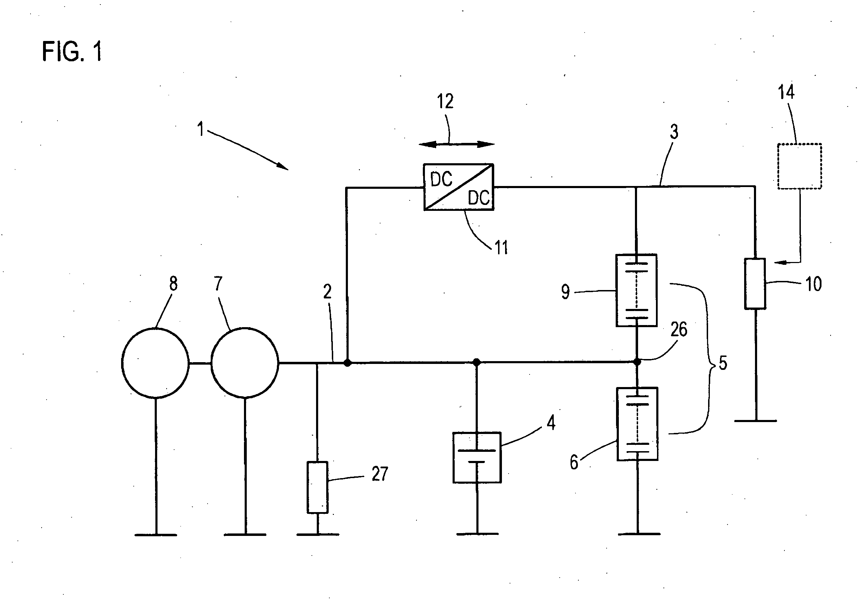

Fig. 1 zeigt eine Prinzipskizze eines Bordnetzes 1 eines erfindungsgemäßen Kraftfahrzeugs in einem ersten Ausführungsbeispiel. Ersichtlich handelt es sich um ein Mehrspannungs-Bordnetz 1, welches ein Niedrigspannungsnetz 2, hier bei 12 V, und ein Hochspannungsnetz 3, hier bei 48 V, umfasst. Elektrische Energie kann in das Niedrigspannungsnetz 2 dabei hauptsächlich über einen ersten Energiespeicher 4, hier eine übliche Blei-Batterie, und einen Generator 7 eingespeist werden. Um die 48 V-Spannung, also die zweite Spannung, für das Hochspannungsnetz 3 bereitzustellen, ist ein zweiter Energiespeicher 5 vorgesehen, der hier jedoch ersichtlich aufgeteilt ist.

Der erste Teilenergiespeicher 6, hier als ein Superkondensator ausgebildet, liefert einen Spannungsanteil von 12 V und ist letztlich über den Mittenabgriffspunkt 26 mit dem Niedrigspannungsnetz 2 verbunden, so dass er zum einen als weitere 12 V-Energiequelle für das Niedrigspannungsnetz 2 dienen kann, zum anderen aber auch unmittelbar über den Generator 7 aufgeladen werden kann. Die in dem ersten Energiespeicher 4 und dem ersten Teilenergiespeicher 6 gespeicherte elektrische Energie kann eingesetzt werden, um beispielsweise einen an das Niedrigspannungsnetz 2 angeschlossenen Starter 8 oder weitere Niedrigspannungsverbraucher 27 zu versorgen.

Es sei im Übrigen an dieser Stelle angemerkt, dass es auch denkbar ist, den ersten Teilenergiespeicher 6 als eine Art Aushilfsbatterie zu verwenden, wenn dieser und einige der Niedrigspannungsverbraucher 27 über einen geeigneten Schalter von dem übrigen Niedrigspannungsnetz 2, insbesondere also dem ersten Energiespeicher 4 und dem Starter 8, abgetrennt werden, beispielsweise während eines Startvorgangs, um so Schwankungen zu vermeiden. Dies ist in Fig. 1 jedoch der Übersichtlichkeit halber nicht näher dargestellt.

Dem ersten Teilenergiespeicher 6, der ja dem ersten Energiespeicher 4 parallel geschaltet ist, folgt in Reihe zum Hochspannungsnetz 3 hin ein zweiter Teilenergiespeicher 9, der in diesem Ausführungsbeispiel wiederum als ein Superkondensator ausgebildet ist und der die übrige benötigte Spannung, hier 36 V, zur Verfügung stellt. Somit ergeben der erste Teilenergiespeicher 6 und der zweite Teilenergiespeicher 9 den zweiten Energiespeicher 5, der die zweite Spannung für das Hochspannungsnetz 3 zur Verfügung stellt.

Das Hochspannungsnetz 3 weist Hochspannungs-Verbraucher 10 auf, beispielsweise einen elektrischen Turbolader, in diesem Ausführungsbeispiel jedoch insbesondere eine Frontscheibenheizung für eine Frontscheibe des Kraftfahrzeugs.

Das Hochspannungsnetz 3 und das Niedrigspannungsnetz 2 sind ferner über einen Gleichspannungswandler 11 miteinander verbunden, der, wie der Pfeil 12 andeutet, in beide Richtungen betrieben werden kann. Auf diese Art und Weise ist es je nach Ansteuerung des Gleichspannungswandlers 11 möglich, den zweiten Teilenergiespeicher 9 mit einer bestimmten Ladeleistung über den Generator 5 zu laden oder aber auch Energie des zweiten Teilenergiespeichers 9 auch im Niedrigspannungsnetz 2 nutzbar zu machen.

Es sei im Übrigen angemerkt, dass auch, was der Übersichtlichkeit halber nicht näher dargestellt ist, denkbar ist, dann, wenn der zweite Teilenergiespeicher 9 entladen ist, wenigstens einen Teil der HochspannungsVerbraucher 10 über das Niedrigspannungsnetz zu speisen, um einen (wenn auch eingeschränkten) Betrieb zu ermöglichen. Hierzu kann eine geeignete Schalteinrichtung vorgesehen sein.

Bei dem ersten und dem zweiten Teilenergiespeicher 6, 9 müssen nicht zwangsläufig Superkondensatoren, wie in diesem Ausführungsbeispiel, verwendet werden, sondern es können auch andere, bezüglich der Ladespannung und der Entladespannung hysteresefreie Energiespeicher eingesetzt werden, insbesondere auch Kombinationen unterschiedlicher Zellen, beispielsweise eine Kombination aus drei Lithium-Ionen-Zellen (LMO) mit einer Lithiumtitanatzelle (LTO). Auch eine Kombination von Superkondensatoren mit derartigen Zellen ist denkbar. Insbesondere im Hinblick auf Hochleistungsverbraucher unter den Hochspannungs-Verbrauchern 10 bietet sich jedoch ein Superkondensator zumindest als zweiter Teilenergiespeicher 9 an.

Liegen nun beispielsweise hohe Stromstöße im Hochspannungsnetz 3 vor, so haben diese eine geringere Auswirkung auf die Spannung im Niedrigspannungsnetz 2, nachdem durch die Parallelschaltung des ersten Energiespeichers 4 und des ersten Teilenergiespeichers 6 auch deren Innenwiderstände parallel geschaltet sind; zudem wirkt sich die Hysteresefreiheit des ersten Teilenergiespeichers 6 positiv aus.

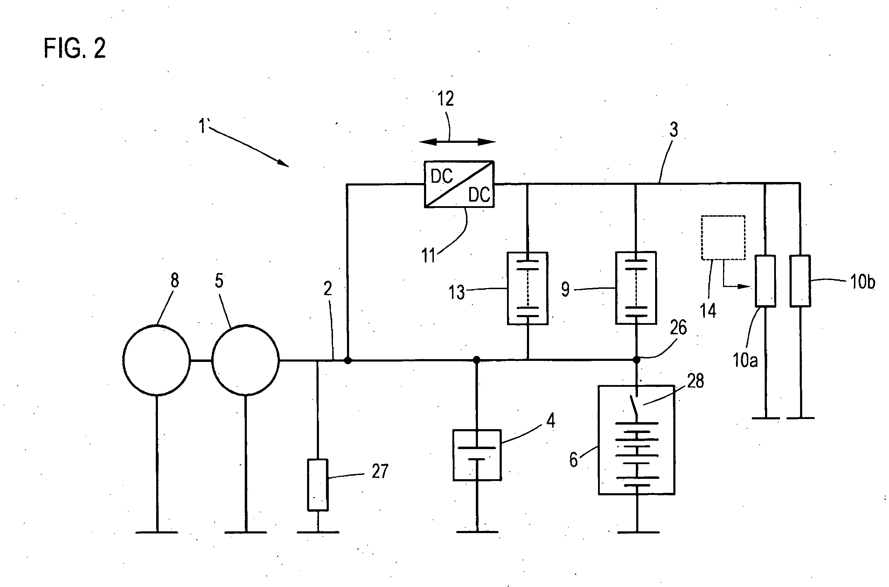

Fig. 2 zeigt ein gegenüber Fig. 1 leicht modifiziertes Ausführungsbeispiel eines Bordnetzes 1', indem der Einfachheit halber gleiche Komponenten mit gleichen Bezugszeichen bezeichnet sind. Ersichtlich ist im Unterschied zur ersten Ausführungsform in Fig. 1 dem zweiten Teilenergiespeicher 9, der wiederum als Superkondensator ausgebildet ist, hier eine Lithium-lonen-Batterie 13 parallel geschaltet. Auf diese Weise ist auch eine längerfristige Energieversorgung im Hochspannungsnetz 3 möglich, weshalb zur Verdeutlich die Hochspannungs-Verbraucher 10 hier in Hochenergieverbraucher 10a, die keine Spitzenleistungen, dafür aber Leistungen für längere Zeit benötigen, und Hochleistungsverbraucher 10b, die impulsartige große Leistungen benötigen, aufgeteilt sind. Ein Hochenergieverbraucher 10a kann beispielsweise eine Frontscheibenheizung sein, die beispielsweise über 20 bis 40 Sekunden bei 1000 W eine Frontscheibe des Kraftfahrzeugs beheizen soll. Ein Hochleistungsverbraucher 10b ist beispielsweise ein elektrischer Turbolader, aus dem innerhalb von 2 bis 3 Sekunden beispielsweise 5 bis 7 kW benötigt werden. Durch das zusätzliche Vorsehen der Lithium-lonen-Batterie 13 ist ein auch für längeren Betrieb geeigneter Speicher elektrischer Energie gegeben, der die Gesamtanordnung weiter verbessert. Verschiedenste Anwendungsfälle können über den als Superkondensator ausgebildeten zweiten Teilenergiespeicher 9 und die Lithium-Ionen-Batterie 13 abgedeckt werden.

Im vorliegenden Beispiel wurde auch der erste Teilenergiespeicher 6 verändert, indem dieser nun drei Lithium-Ionen-Zellen und eine Lithiumtitanat-Zelle umfasst.

In Fig. 2 ist auch eine Schalteinrichtung 28 an dem zweiten Teilenergiespeicher 6 gezeigt. Die Schalteinrichtung 28 kann zweckmäßig auch in der Zuleitung zum Mittenabgriffspunkt 26 vorgesehen werden, um eine komplette Trennung des ersten Energiespeichers 4 von dem zweiten Energiespeicher 5 zu erlauben.

In den Bordnetzen 1, 1' lässt sich durch geschickte Ansteuerung der Hochspannungsverbraucher 10, 10a, 10b ein erhöhter Komfort für Benutzer des Kraftfahrzeugs realisieren. Hierzu ist in Fig. 1 und Fig. 2 schematisch eine im Beispiel der Frontscheibenheizung zugeordnete Steuereinrichtung 14 dargestellt, die in Antwort auf ein geeignetes Aktivierungssignal die Frontscheibenheizung auch dann bereits aktivieren kann, wenn das Kraftfahrzeug noch nicht in Betrieb ist, insbesondere noch nicht einmal betreten wurde. Hierzu kann als Aktivierungssignal beispielsweise die Betätigung eines Bedienelements an einem Schlüssel für das Kraftfahrzeug oder einer anderen Fernbedienung herangezogen werden, wobei jedoch auch automatische Ermittlungsmethoden für ein solches Aktivierungssignal denkbar sind. Dies ermöglicht letztlich das Vorsehen des zweiten Teilenergiespeichers 9 bzw. des zweiten Teilenergiespeichers 9 und der Lithium-Ionen-Batterie 13, welche die Belastung größtenteils von dem ersten Energiespeicher 4 und dem Niedrigspannungsnetz 2 hinwegnehmen, so dass mithin die grundsätzliche Startfähigkeit über den Starter 8 erhalten bleibt.

Dies ergibt sich daraus, dass der zweite Teilenergiespeicher 9 (und im Fall von Fig. 2 die Lithium-Ionen-Batterie 13) bereits geladen vorliegen, so dass hier Energie eingesetzt werden kann. Eine Phase niedriger Last im Bordnetz 1, 1' kann genutzt werden, um den Teilenergiespeicher 9 und gegebenenfalls die Lithium-Ionen-Batterie 13 wieder aufladen zu können.

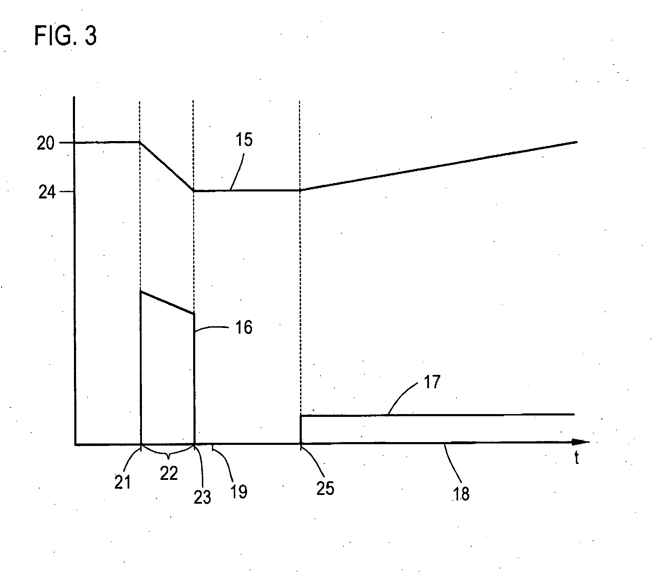

Dieses durch die Steuereinrichtung 14 realisierte Ansteuerungskonzept wird durch die Graphen in Fig. 3 näher veranschaulicht. Dabei sind in Fig. 3 drei Größen gegen die Zeit gezeigt, nämlich zum einen die für das Hochspannungsnetz 3 zur Verfügung stehende Energie als Graph 15, der Strom durch den Widerstand der Frontscheibenheizung als Graph 16 und der Ladestrom über den Gleichspannungswandler 11 zum Wiederaufladen des zweiten Teilenergiespeichers 9 und gegebenenfalls der Lithium-Ionen-Batterie 13 als Graph 17. Die Achse 18 markiert den Zeitablauf.

Zu einem Zeitpunkt 19 wird in diesem Ausführungsbeispiel der Motor des Kraftfahrzeugs gestartet. Dieser Zeitpunkt ist nur beispielhaft nach dem Zeitraum 22 gezeigt; er kann auch in den Zeitraum 22 hineinfallen.

Zunächst liegen also der zweite Teilenergiespeicher 9 und gegebenenfalls die Lithium-Ionen-Batterie 13 in einem bestimmten Ladezustand 20 vor. Zu einem Zeitpunkt 21, der sogar vor dem Betreten des Kraftfahrzeugs durch den Fahrer liegt, erhält die Steuereinrichtung 14 das Aktivierungssignal, beispielsweise nach Betätigung eines Bedienelements auf dem Schlüssel des Kraftfahrzeugs durch den sich nähernden Fahrer. Die Steuereinrichtung 14 aktiviert nun die Frontscheibenheizung zum Zeitpunkt 21, so dass ein einen Heizwiderstand in der Frontscheibe erhitzender Stromfluss in einem Zeitabschnitt 22 entsteht, der beispielsweise vier bis sechs Minuten andauern kann. Ist die Frontscheibe abgetaut, Zeitpunkt 23, ist die vorhandene Ladung auf einen niedrigeren Ladezustand 24 reduziert, jedoch bezüglich der Energiespeicher des Niedrigspannungsnetzes 2, die nur zu einem geringen Anteil belastet werden, nicht soweit, dass ein Starten des Kraftfahrzeugs nicht möglich sein könnte. Dieses Starten des Motors des Kraftfahrzeugs erfolgt nun zu einem Zeitpunkt 19, das bedeutet, dann ist der Generator 7 auch aktiv. Nichtsdestotrotz werden der zweite Teilenergiespeicher 9 und gegebenenfalls die Lithium-Ionen-Batterie 13 nicht sofort geladen, nachdem das Bordnetz 1, 1' zunächst noch stark belastet ist. Erst wenn die Belastung des Bordnetzes 1, 1', insbesondere also im Niedrigspannungsnetz 2, unter einen Schwellwert gesunken ist, Zeitpunkt 25, wird über den Gleichspannungswandler 11 geladen, jedoch ersichtlich mit geringerer Leistung als bei Realisierung der Komfortfunktion durch die Frontscheibenheizung. Der Ladevorgang kann mithin beispielsweise 20 bis 30 Minuten in Anspruch nehmen.

Es sei schließlich noch angemerkt, dass sich das Ansteuerungsverfahren, wie es bezüglich in Fig. 3 erläutert wurde, auch abseits vom Kraftfahrzeug mit dem erfindungsgemäß ausgestalteten Bordnetz 1, 1' einsetzen lässt, beispielsweise, wenn ein zweiter Energiespeicher für die HochspannungsVerbraucher separat gegen Masse geschaltet vorgesehen wird.

## Patentansprüche

1. Kraftfahrzeug mit einem Bordnetz (1, 1'), welches ein einen ersten elektrischen Energiespeicher (4) aufweisendes Niedrigspannungsnetz (2) mit einer ersten Spannung und ein einen zweiten elektrischen Energiespeicher (5) aufweisendes Hochspannungsnetz (3) mit einer zweiten Spannung, die höher als die erste Spannung ist, aufweist, wobei das Hochspannungsnetz (3) und das Niedrigspannungsnetz (2) über einen Gleichspannungswandler (11) verbunden sind,
**dadurch gekennzeichnet,**
**dass** der zweite Energiespeicher (5) in einen in seiner Spannung dem ersten Energiespeicher (4) entsprechenden, dem ersten Energiespeicher (4) parallel geschalteten ersten Teilenergiespeicher (6) und einen zu dem ersten Teilenergiespeicher (6) in Serie geschalteten zweiten Teilenergiespeicher (6) aufgeteilt ist, wobei ein an dem Hochspannungsnetz (3) angeschlossener Verbraucher (10, 10a, 10b) ein eine Komfortfunktion realisierender Verbraucher oder ein elektrischer Turbolader ist.

2. Kraftfahrzeug nach Anspruch 1,
**dadurch gekennzeichnet,**
**dass** der erste und/oder der zweite Teilenergiespeicher (6, 9) ein bezüglich der Lade- und Entladespannung hysteresefreier Energiespeicher ist und/oder der erste Energiespeicher (4) eine Bleibatterie ist.

3. Kraftfahrzeug nach Anspruch 1 oder 2,
**dadurch gekennzeichnet,**
**dass** der erste und/oder der zweite Teilenergiespeicher (6, 9) ein Superkondensator ist.

4. Kraftfahrzeug nach einem der vorangehenden Ansprüche,
**dadurch gekennzeichnet,**
**dass** dem zweiten Teilenergiespeicher (9) eine Lithium-Ionen-Batterie (13) mit der Spannung des zweiten Teilenergiespeichers (9) entsprechender Spannung parallel geschaltet ist.

5. Kraftfahrzeug nach einem der vorangehenden Ansprüche,
**dadurch gekennzeichnet,**
**dass** der Verbraucher (10, 10a) eine Heizeinrichtung, insbesondere eine Heizeinrichtung für eine Frontscheibe des Kraftfahrzeugs, ist.

6. Kraftfahrzeug nach einem der vorangehenden Ansprüche,
**dadurch gekennzeichnet,**
**dass** eine Steuereinrichtung (14) vorgesehen ist, die zur Aktivierung des eine Komfortfunktion realisierenden Verbrauchers (10, 10a) vor Inbetriebnahme des Kraftfahrzeugs, insbesondere vor Betreten des Kraftfahrzeugs durch den Fahrer, bei Vorliegen eines Aktivierungssignals ausgebildet ist.

7. Kraftfahrzeug nach Anspruch 6,
**dadurch gekennzeichnet,**
**dass** das Aktivierungssignal von einem dem Kraftfahrzeug zugeordneten Schlüssel aussendbar ist und/oder unter Berücksichtigung von den Ort des Schlüssels beschreibenden Messdaten ermittelbar ist.

8. Kraftfahrzeug nach Anspruch 6 oder 7,
**dadurch gekennzeichnet,**
**dass** die Steuereinrichtung (14) zum Laden des zweiten Teilenergiespeichers (9) bei einer einen Schwellwert unterschreitenden Auslastung des Bordnetzes (1, 1') des Kraftfahrzeugs ausgebildet ist.

9. Kraftfahrzeug nach einem der vorangehenden Ansprüche,
**dadurch gekennzeichnet,**
**dass** es einen zum Laden des ersten und des zweiten Energiespeichers (4, 5) ausgebildeten Generator (7) aufweist.

10. Kraftfahrzeug nach einem der vorangehenden Ansprüche,
**dadurch gekennzeichnet,**
**dass** Energie des zweiten Teilenergiespeichers (9) über den Gleichspannungswandler (11) in dem Niedrigspannungsnetz (2) nutzbar ist.

11. Kraftfahrzeug nach einem der vorangehenden Ansprüche,
**dadurch gekennzeichnet,**
**dass** die erste Spannung 12 V beträgt und/oder die zweite Spannung im Bereich von 36 bis 52 V liegt, insbesondere 48V beträgt.

12. Verfahren zum Betrieb eines eine Komfortfunktion realisierenden Verbrauchers in einem Kraftfahrzeug nach einem der vorangehenden Ansprüche, welcher Verbraucher an das Hochspannungsnetz angeschlossen ist, wobei der Verbraucher vor Inbetriebnahme des Kraftfahrzeugs, insbesondere vor Betreten des Kraftfahrzeugs durch den Fahrer, aktiviert wird.

## Claims

1. Motor vehicle having an on-board electrical system (1, 1') which comprises a low-voltage network (2) operating at a first voltage and having a first electrical energy storage device (4), and a high-voltage network (3) operating at a second voltage higher than the first voltage and having a second electrical energy storage device (5), the high-voltage network (3) and the low-voltage network (2) being connected by means of a DC converter (11),
**characterised in that**
the second energy storage device (5) is divided into a first partial energy storage device (6) that has a voltage corresponding to the voltage of the first energy storage device (4) and is connected in parallel with the first energy storage device (4), and a second partial energy storage device (6) that is connected in series with the first partial energy storage device (6), a consumer load (10, 10a, 10b) connected to the high-voltage network (3) being a consumer load that provides a comfort function or an electric turbocharger.

2. Motor vehicle according to claim 1, **characterised in that** the first and/or second partial energy storage device (6, 9) is an energy storage device lacking hysteresis with respect to the charging and discharging voltage and/or the first energy storage device (4) is a lead battery.

3. Motor vehicle according to claim 1 or 2, **characterised in that** the first and/or second partial energy storage device (6, 9) is a supercapacitor.

4. Motor vehicle according to one of the preceding claims, **characterised in that** a lithium-ion battery (13) having a voltage corresponding to the voltage of the second partial energy storage device (9) is connected in parallel with the second partial energy storage device (9).

5. Motor vehicle according to one of the preceding claims, **characterised in that** the consumer load (10, 10a) is a heating device, particularly a heating device for a front windshield of the motor vehicle.

6. Motor vehicle according to one of the preceding claims, **characterised in that** a control device (14) is provided which is configured to activate the consumer load (10, 10a) providing a comfort function before the motor vehicle is started up, particularly before the driver gets into the vehicle, in response to an activation signal.

7. Motor vehicle according to claim 6, **characterised in that** the activation signal can be transmitted from a key associated with the vehicle and/or can be determined on the basis of measurement data describing the location of the key.

8. Motor vehicle according to claim 6 or 7, **characterised in that** the control device (14) is configured to charge the second partial energy storage device (9) when utilisation of the on-board electrical system (1, 1') of the motor vehicle is below a threshold value.

9. Motor vehicle according to one of the preceding claims, **characterised in that** it comprises a generator (7) configured to charge the first and second energy storage devices (4, 5).

10. Motor vehicle according to one of the preceding claims, **characterised in that** energy from the second partial energy storage device (9) can be utilised in the low-voltage network (2) via the DC converter (11).

11. Motor vehicle according to one of the preceding claims, **characterised in that** the first voltage is 12 V and/or the second voltage is in a range from 36 to 52 V, and in particular amounts to 48V.

12. Method of operating a consumer load that provides a comfort function in a motor vehicle according to one of the preceding claims, said consumer load being connected to the high-voltage network, the consumer load being activated before the vehicle is started up, particularly before the driver has got into the vehicle.

## Revendications

1. Véhicule automobile comprenant un réseau de bord (1, 1'), qui présente un réseau basse tension (2), présentant un premier accumulateur d'énergie (4) électrique, avec une première tension et un réseau haute tension (3), présentant un deuxième accumulateur d'énergie (5) électrique, avec une deuxième tension, qui est plus élevée que la première tension, le réseau haute tension (3) et le réseau basse tension (2) étant reliés par l'intermédiaire d'un convertisseur de tension continue (11),
**caractérisé en ce**
**que** le deuxième accumulateur d'énergie (5) est divisé en un premier accumulateur d'énergie partielle (6) correspondant dans sa tension au premier accumulateur d'énergie (4), monté en parallèle par rapport au premier accumulateur d'énergie (4) et en un deuxième accumulateur d'énergie partielle (6) monté en série par rapport au premier accumulateur d'énergie partielle (6), un consommateur (10, 10a, 10b) raccordé au réseau haute tension (3) étant un consommateur proposant une fonction confort ou un turbocompresseur à suralimentation électrique.

2. Véhicule automobile selon la revendication 1,
**caractérisé en ce**
**que** le premier et/ou le deuxième accumulateur d'énergie partielle (6, 9) sont un accumulateur d'énergie anhystérétique par rapport à la tension de charge et de décharge et/ou en ce que le premier accumulateur d'énergie (4) est une batterie au plomb.

3. Véhicule automobile selon la revendication 1 ou 2,
**caractérisé en ce**
**que** le premier et/ou le deuxième accumulateur d'énergie partielle (6, 9) sont un supercondensateur.

4. Véhicule automobile selon l'une quelconque des revendications précédentes,
**caractérisé en ce**
**qu'**une batterie lithium-ion (13) avec une tension correspondant à la tension du deuxième accumulateur d'énergie partielle (9) est montée en parallèle par rapport au deuxième accumulateur d'énergie partielle (9).

5. Véhicule automobile selon l'une quelconque des revendications précédentes,
**caractérisé en ce**
**que** le consommateur (10, 10a) est un système de chauffage, en particulier un système de chauffage pour une vitre avant du véhicule automobile.

6. Véhicule automobile selon l'une quelconque des revendications précédentes,
**caractérisé en ce**
**qu'**un système de commande (14) est prévu, lequel est réalisé aux fins de l'activation du consommateur (10, 10a) proposant une fonction confort avant la mise en service du véhicule automobile, en particulier avant que le conducteur n'entre dans le véhicule, en présence d'un signal d'activation.

7. Véhicule automobile selon la revendication 6,
**caractérisé en ce**
**que** le signal d'activation peut être émis par une clé associée au véhicule automobile et/ou peut être déterminé en tenant compte des données de mesure décrivant la position de la clé.

8. Véhicule automobile selon la revendication 6 ou 7,
**caractérisé en ce**
**que** le système de commande (14) est réalisé aux fins du chargement du deuxième accumulateur d'énergie partielle (9) lorsqu'un taux d'utilisation du réseau de bord (1, 1') du véhicule automobile présente une valeur inférieure à une valeur seuil.

9. Véhicule automobile selon l'une quelconque des revendications précédentes,
**caractérisé en ce**
**qu'**il présente un générateur (7) réalisé aux fins du chargement du premier et du deuxième accumulateur d'énergie (4, 5).

10. Véhicule automobile selon l'une quelconque des revendications précédentes,
**caractérisé en ce**
**que** l'énergie du deuxième accumulateur d'énergie partielle (9) peut être utilisée dans le réseau basse tension (2) par l'intermédiaire du convertisseur de tension continue (11).

11. Véhicule automobile selon l'une quelconque des revendications précédentes,
**caractérisé en ce**
**que** la première tension est égale à 12 V, et/ou en ce que la deuxième tension est comprise dans la plage allant de 36 à 52 V, en particulier est égale à 48 V.

12. Procédé servant à faire fonctionner un consommateur proposant une fonction confort dans un véhicule automobile selon l'une quelconque des revendications précédentes, lequel consommateur est raccordé à un réseau haute tension, le consommateur étant activé avant la mise en service du véhicule automobile, en particulier avant que le conducteur n'entre dans le véhicule automobile.
